# EUROPEAN PATENT APPLICATION

(11) **EP 0 942 187 A1**
(43) Date of publication of application: **15.09.1999**
(21) Application number: 99104926.3
(22) Date of filing: 11.03.1999
(51) Int. Cl.: F16C 33/76

(54) **Seal for bearing**

(30) Priority: 13.03.1998 JP 6291998
(71) Applicant: Innovative Environmental Technology Co., Ltd., Fukuoka-shi, Fukuoka (JP)
(72) Inventor: Takeda, Masuo, Fukuoka-shi, Fukuoka (JP)
(74) Representative: Glawe, Delfs, Moll & Partner

(57) **Abstract**

A seal device (10a) which can prolong the intervals between overhauls by preventing entry of gas into a bearing. A seal cap (11) having a first opening (14) sized to receive a motor shaft (4) and a second opening (15) sized to cover at least a bearing (6a,6b). Grease (12) is poured into the cap (11), and the first opening (14) is sealed by an O-ring (13). This prevents entry of gas into the bearing (6a,6b), thereby prolonging intervals between overhauls.

## Description

### BACKGROUND OF THE INVENTION

This invention relates to a seal device for a bearing for preventing entry of foreign matter, particularly gas, into a bearing.

CVD (Chemical Vapor Deposition) is well-known as a method for manufacturing semiconductors.

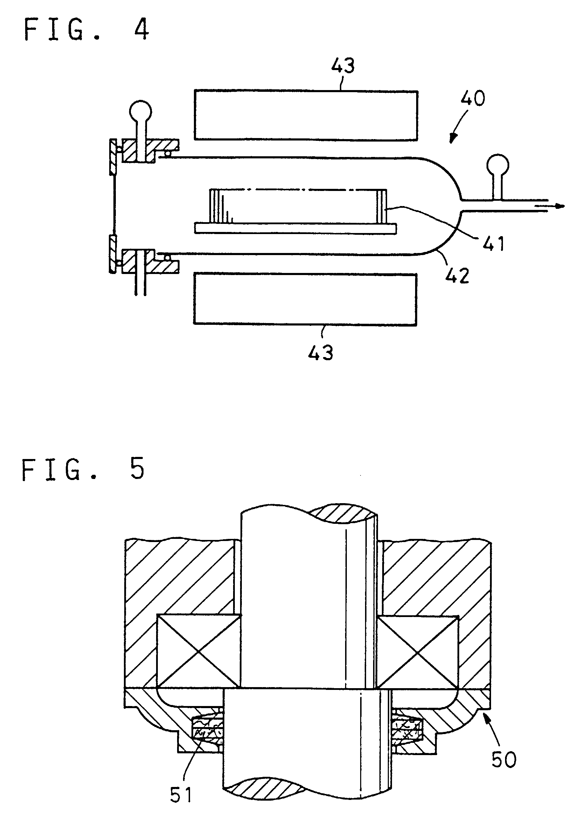

In a CVD device shown in Fig. 4, a reaction tube 42, in which is housed a board 41, is depressurized and heated by heaters 43, and a reaction gas is introduced thereinto to form a semiconductor monocrystal film on the board 41 by heat decomposition, hydrolysis or oxidation in a vapor phase.

In such a CVD device, a vacuum pump having a rotary member such as an oil-sealed rotary vacuum pump is used for depressurization.

A conventional vacuum pump used for CVD is provided with a contact-seal type shaft seal 51 (Fig.5) using felt that is high in sealability at its bearing portion 50 to prevent entry of oil mist or reaction gas from the reaction tube 42 into the pump.

But through such a shaft seal, highly corrosive gases such as acids and alkalis (e.g. mono-silane gas), or gases containing reaction products tend to penetrate, little by little, into the bearing. Once inside the bearing, such reaction gases solidify and increase friction of the bearing. This increases the possibility of the bearing getting seized and can lead to shutdown of the vacuum pump in the worst case. To prevent this problem, it is necessary to stop the device for overhaul periodically, e.g. once in every half year. This adds to the running cost.

An object of this invention is to prolong the intervals between overhauls by preventing entry of gas into the bearing.

### SUMMARY OF THE INVENTION

According to this invention, there is provided a bearing seal device comprising a seal cap for covering a gap between an end face of a bearing or a casing to which is mounted a bearing and a shaft protruding from the casing, a grease filled in the seal cap, and an O-ring, the seal cap having a first opening sized to receive the shaft, and a second opening sized to cover at least the bearing end face or the casing, wherein a joint portion is formed between the bearing, the casing, and the shaft, wherein the seal cap is mounted with the second opening of the seal cap facing the bearing and the seal cap filled with the grease, and the first opening is sealed by the O-ring.

Other features and objects of the present invention will become apparent from the following description made with reference to the accompanying drawings, in which:

### BRIEF DESCRIPTION OF THE DRAWINGS

Fig. 1 is a sectional view of an embodiment;
Fig. 2 is a partial enlarged sectional view of the embodiment;
Fig. 3 is a plan view of another embodiment;
Fig. 4 is a schematic view of a CVD device; and
Fig. 5 is a sectional view of the prior art arrangement.

### DETAILED DESCRIPTION OF THE PREFERRED EMBODIMENT

An embodiment is described with reference to the drawings.

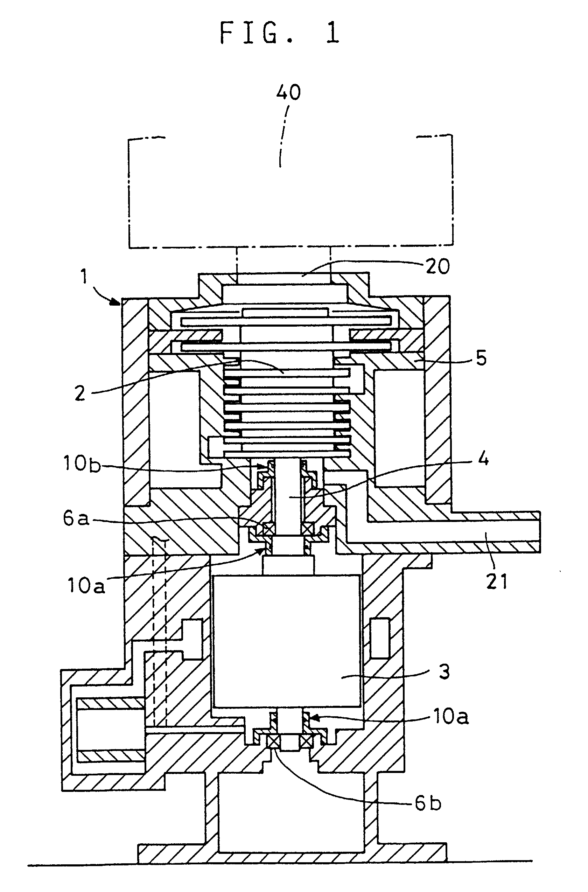

Fig. 1 shows a dry vacuum pump 1 to which the present invention is applied.

As shown in Fig. 1, the dry vacuum pump 1 comprises a rotor 2 and a motor 3. The rotor 2 is directly mounted on a motor shaft 4. The rotor 2 and a stator 5 surrounding the rotor 2 form a pump unit.

The motor shaft 4 is supported by bearings 6a, 6b to which are mounted seal devices 10a and 10b.

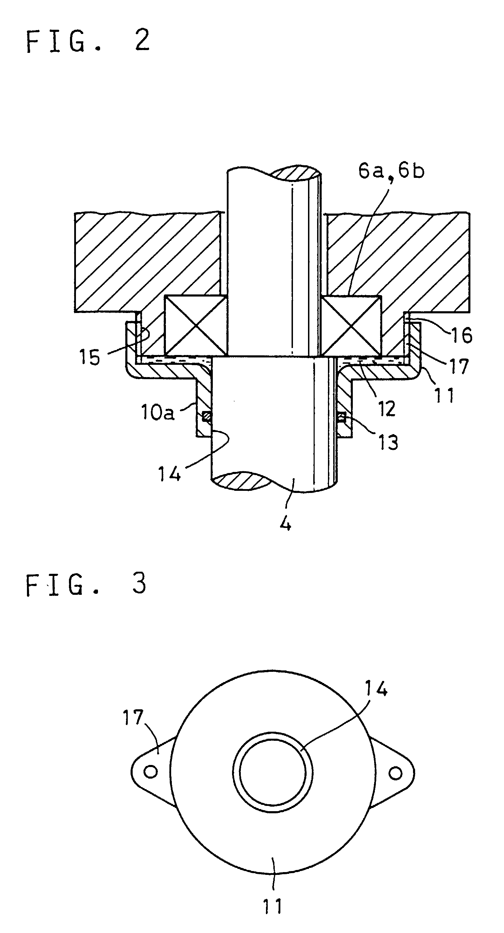

As shown in Fig. 2, the seal devices 10a, 10b each comprise a seal cap 11, grease 12 filled in the cap 11, and an O-ring 13.

The seal cap 11 of the seal device 10a has a first opening 14 of a size suitable to receive the motor shaft 4, and a second opening 15 sized such that at least the bearing 6a, 6b are received. In this embodiment, the second opening 15 has a slightly larger diameter than a mounting portion 16 of a casing supporting the bearing, and is formed with threads in its inner periphery to form a mounting portion 17. Threads are also formed in the outer periphery of the mounting portion 16 of the casing. Each seal cap 11 can thus be screwed on the mounting portion 16 with the second opening 15 facing toward the bearing 6a, 6b.

On the other hand, while not shown, the seal cap 11 of the seal device 10b has a first opening 14 large enough to receive the motor shaft 4, and a second opening 15 sized to cover at least a shaft hole of the casing and thus to cover the space between the casing and the motor shaft 4. In this embodiment, the second opening is slightly larger than the shaft hole, and is formed with threads in its inner periphery. Threads are also formed in the casing at its portion around the shaft hole so that the seal cap 11 can be screwed onto the casing.

Before being screwed onto the casing, the caps 11 are filled with grease 12 and the first openings 14 are sealed by the O-rings 13.

Grease 12 contains a fluorine series base oil and is high in high-temperature resistance, lubricity, oxidation stability and fire resistance so that it is less likely to deteriorate at high temperatures and thus less likely to suffer change of properties with lapse of time.

In Fig. 1, numeral 20 is an intake port, and 21 is an outlet port.

If the dry pump 1 is used as a vacuum pump for depressurization in a CVD device 40, the gaps between the bearings 6a, 6b of the motor shaft 4 of the dry pump 1 and the casing supporting the bearing 6a and the motor shaft 4 are covered by the seal caps 11 and sealed by the grease in the caps.

That is, the cap 11 retains the grease 12 therein while preventing entry of foreign objects. On the other hand, the base oil component and additives of the grease 12 in the seal caps 11 form an adsorption film on the metal surface to seal the gaps between the mounting portion 16 of the casing and the mounting portions 17 of the seal caps 11, between the seal caps 11 and the O-rings 13, and between the motor shaft 4 and the casing, thus preventing entry of gas into the bearings 6a, 6b.

By keeping off gas, it is possible to keep the bearings 6a, 6b seizure-free for a long time.

Even if the temperature at a portion between the seal caps 11 and the O-rings 13 rises due to the rotation of the motor shaft 4, the grease 12 will serve as a lubricant and prevent seizure and wear.

Further, if the gap between the seal cap 11 and the O-ring or between the casing and the motor shaft 4 changes due to vibrations of the rotor 2, grease 12 will flow into the gap to seal the gap, thereby preventing entry of gas.

Since the grease is a fluorine series grease high in high-temperature resistance, lubricity, oxidation stability and fire resistance, it is possible to prevent seizure to high temperatures. Thus, the present invention is applicable to bearings 6a, 6b of a vacuum pump 1 that is rotated at high speed.

Although simple in structure, the seal device 10 can perfectly prevent entry of highly corrosive gases (such as mono-silane gas), gases including reaction products and other foreign matter.

The seal device can also prevent scattering of oil mist from the bearings 6a, 6b to the pump unit.

In this embodiment, the seal caps 11 are screwed onto the casing by the threads formed in the mounting portion of each seal cap 11. But the caps may be mounted in any other way. For example, in the embodiment of Fig. 3, each cap has a mounting portion 17 formed with a through hole, and is mounted by bolts to a mounting portion 16 of the casing formed with a threaded hole.

In this arrangement, the seal caps can be mounted on an existing bearing simply by forming a threaded hole in the casing.

This seal device 10 is simple in structure and less likely to fail, so that no replacement is necessary.

By simply changing the design of the mounting portion at the second opening 15, it can be mounted on any bearing. Thus, the present invention is applicable not only to vacuum pump bearings but to bearings of other types such as bearings for NC machines and vehicle axle bearings.

The seal device according to this invention prevents entry of gas into a bearing.

Thus, it is possible to substantially prolong the intervals between overhauls of a CVD vacuum pump (which were heretofore about half a year).

Since the seal device of the invention is simple in structure, it can be used for bearings of different types simply by slightly changing its design.

## Claims

1. A bearing seal device comprising a seal cap for covering a gap between an end face of a bearing or a casing to which is mounted a bearing and a shaft protruding from the casing, a grease filled in said seal cap, and an O-ring,
said seal cap having a first opening sized to receive said shaft, and a second opening sized to cover at least the bearing end face or the casing, wherein a joint portion is formed between the bearing, said casing, and said shaft,
wherein said seal cap is mounted with said second opening of said seal cap facing said bearing and said seal cap filled with said grease, and said first opening is sealed by said O-ring.

2. The bearing seal device as claimed in claim 1 wherein said grease contains a fluorine series base oil.

3. The bearing seal device as claimed in claim 1 or 2 wherein said bearing is a bearing for a vacuum pump used in a semiconductor manufacturing apparatus.
